# EUROPEAN PATENT SPECIFICATION

(11) **EP 4 048 047 B1**
(45) Date of publication and mention of the grant of the patent: **31.07.2024**
(21) Application number: 20765102.7
(22) Date of filing: 31.08.2020
(51) Int. Cl.: A01B 3/46, A01B 63/22, A01B 73/00, B60B 35/00

(54) **IMPROVED TROLLEY UNIT, IN PARTICULAR FOR A REVERSIBLE PLOUGHING SYSTEM, AND REVERSIBLE PLOUGHING SYSTEM COMPRISING SUCH TROLLEY UNIT**
VERBESSERTE WAGENEINHEIT, INSBESONDERE FÜR EIN WENDEPFLUGSYSTEM, UND WENDEPFLUGSYSTEM MIT EINER SOLCHEN WAGENEINHEIT
ENSEMBLE CHARIOT AMELIORÉ, NOTAMMENT POUR SYSTÈME DE LABOUR REVERSIBLE, ET SYSTÈME DE LABOUR REVERSIBLE COMPORTANT UN TEL ENSEMBLE CHARIOT

(30) Priority: 25.10.2019 IT 201900019804
(43) Date of publication of application: 31.08.2022
(73) Proprietor: Moro Aratri S.R.L., 24056 Fontanella (BG) (IT)
(72) Inventor: ANDREA, Moro, 24056 FONTANELLA (IT)
(74) Representative: Garavelli, Paolo
(86) International application number: PCT/IT2020/050210
(87) International publication number: WO 2021/079388

(56) References cited:
- EP-A1- 1 099 363
- EP-A1- 3 646 687
- EP-A2- 2 168 786
- GB-A- 1 023 095
- US-A1- 2014 327 221
- US-A1- 2016 234 992

## Description

The present invention refers to an improved trolley unit, of the type with abutment of the wheels with double function for circulating and working, in particular for a reversible ploughing system and to a reversible ploughing system comprising such trolley unit.

Various types of ploughing systems are known in the art, with trolley units or wheel-type supporting systems used to handle and transport such systems to their working sites.

In particular, ploughing systems are known, such as for example the one disclosed in EP1099363 of the same Applicant, equipped with a trolley unit which allows the reversible ploughing system to pass from a circulation position to a working position and vice versa: in particular, these known trolley units comprise two hydraulic jacks which perform the function of rotating-translating the wheel hub to make the wheel assume a correct orientation and position for the two phases (working and circulating), and the ploughing depth, depending on the position of the wheels when working, is regulated through a mechanical screwtype limit switch, which limits the translation of the hubs along the main beam of the trolley unit. Consequently, each jack only operates on the movement of its related wheel, without playing any role in the regulation of the working depth.

Trolley units are also known for reversible ploughing systems, which comprise an hydraulic jack aimed to regulate the ploughing depth: in such units, the rotation of the wheel hubs from the circulating position to the working position, and vice versa, must be performed manually, consequently resulting scarcely practical and easy, or through two further dedicated hydraulic jacks, therefore implying a greater complexity of the hydraulic plant, and the need of a further hydraulic actuation of the transporting and working means, such as for example a common agricultural tractor, to which the ploughing system is connected.

Therefore, object of the present invention is solving the above prior art problems, by providing an improved trolley unit, in particular for a reversible ploughing system, comprising a single actuating system which allows both to pass the wheels from a circulating position to a working position and vice versa, and to make such trolley unit assume an operating working configuration chosen among a plurality of possible operating working configurations, for example in order to allow regulating the ploughing depth, performed by the reversible ploughing system to which such trolley unit is connected, consequently having a more practical and easier use, however structurally less complex with respect to what is proposed by the prior art.

A further object of the present invention is providing a reversible ploughing system comprising at least one trolley unit comprising a single actuating system which allows both to pass the wheels from a circulating position to a working position and vice versa, and to make such trolley unit assume an operating working configuration chosen among a plurality of possible operating working configurations, for example in order to allow regulating the ploughing depth, performed by the reversible ploughing system to which such trolley unit is connected, consequently having a more practical and easier use, however structurally less complex with respect to what is proposed by the prior art.

The above and other objects and advantages of the invention, as will result from the following description, are obtained with a trolley unit as claimed in claim 1.

Further, the above and other objects and advantages of the invention are obtained with a reversible ploughing system as claimed in claim 7.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention, as included in the enclosed claims.

The present invention will be better described by some preferred embodiments thereof, provided as a non-limiting example, with reference to the enclosed drawings, in which:
- Figure 1 shows a view of the trolley unit for a reversible ploughing system according to the present invention;
- Figure 2 shows a perspective view of a component of the trolley unit for a reversible ploughing system according to the present invention;
- Figure 3 shows a perspective view of the trolley unit according to the present invention with the wheels in an operating circulating position;
- Figure 4 shows a perspective view of the trolley unit according to the present invention with the wheels in an intermediate operating position between the operating circulating position and an operating working position;
- Figure 5 shows a perspective view of the trolley unit according to the present invention in a first possible operating working configuration with the wheels in an operating working position;
- Figure 6 shows a perspective view of the trolley unit according to the present invention in a second possible operating working configuration;
   and
- Figures 7 and 8 show side views of a preferred embodiment of a reversible ploughing system according to the present invention with the trolley unit, respectively, in the first operating working configuration of Figure 5 and in the second operating working configuration of Figure 6.

For briefness, herein below the descriptions related to parts and components common with other trolley units and ploughing systems will not be provided, since they are not necessary for their basic operation and/or already known in the art, to describe in particular those aspects, components and operating principles characterizing the trolley unit and the reversible ploughing system according to the present invention.

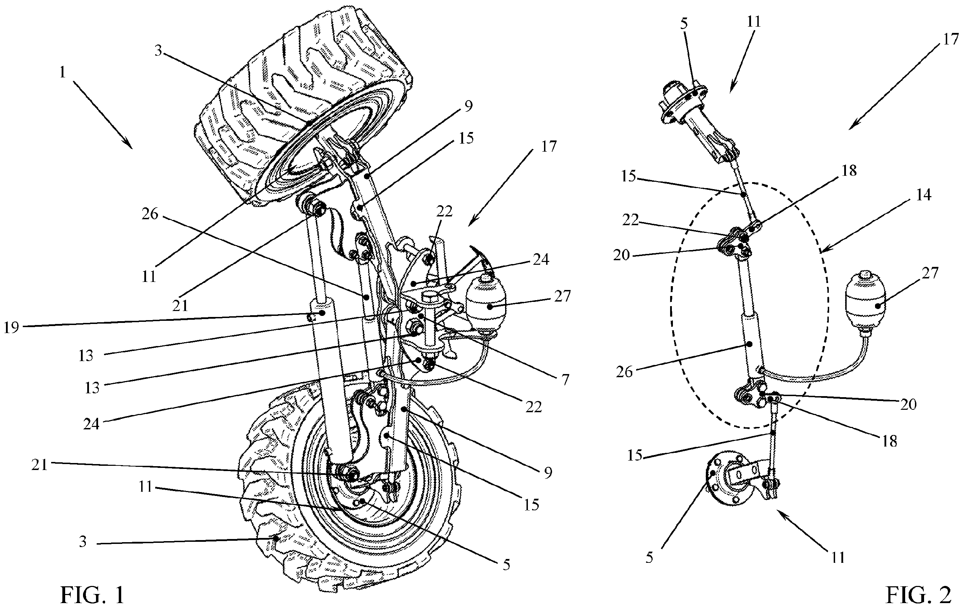

With reference therefore in particular to Figure 1, it is noted that the trolley unit 1 according to the present invention comprises at least two wheels 3, an actuating system 2 and at least one transmission system 17, such actuating system 2 operatively cooperating with such transmission system 17 both for passing such wheels 3 from an operating circulating position to an operating working position, and vice versa, and for changing an operating working configuration of such trolley unit 1, preferably modifying the distance between the wheels 3 (for example at least when the wheels 3 are in their operating working position).

In a preferred and example embodiment thereof, the trolley unit 1 according to the present invention then comprises:
- at least one central articulating assembly 7;
- at least two wheels 3, each of which is connected to a respective rotary hub 5;
- at least one pair of drive shafts 9, each of such drive shafts 9 having a first end connected to a corresponding hub 5 by interposing a articulating kinematism 11, preferably of the hinge type, and a second end pivotally connected to such central articulating assembly 7 in a respective articulation point 13, the transmission system 17 being operatively interposed between the drive shafts 9.

From Figures 1 and 2, it is noted that, in particular, the transmission system 17 comprises at least one articulated kinematism 14 composed of at least one second variable length handling device 26, preferably a second hydraulic jack supplied by a suitable tank 27 containing an hydraulic fluid, common to a pair of articulated transmissions, each of which related to a respective hub 5, each of the articulated transmissions comprising:
- at least one first arm 18;
- at least one second arm 20;
- at least one joining rod 15;
such joining rod 15 having a first end connected to a respective hub 5 by interposing a respective articulating kinematism 11 and a second end connected articulated to a first end of the first arm 18, such first arm 18 having a second end connected articulated to a first end of the second arm 20, such first end of such second arm 20 and such second end of such first arm 18 being further connected articulated to a fixed spot 22 of a respective drive shaft 9 (such fixed spot 22 being preferably arranged along a projecting element 24 of the drive shaft 9), the second arm 20 having a second end hinged to the second variable length handling device 26. Preferably, the second ends of the second arms 20 can be mutually cooperating by interposing the second variable length handling device 26.

The actuating system 2 comprises, preferably, at least one first variable length handling device 19, for example of the type with hydraulic jack, mutually operatively connecting the drive shafts 9 in respective articulation points 21 and adjustable in length depending on the operating position of the wheels 3 and/or on the operating working configuration of the trolley unit 1 which has to be obtained. In particular, such variable-length handling device can have its respective ends connected articulated to a respective drive shaft 9, preferably next to each first end of these latter ones in the respective articulation points 21.

The first variable length handling device 19 will then have a first running position adapted to move, through the cooperation of the transmission system 18, the wheels 3 from their operating circulating position to their operating working position, and vice versa, by acting on the respective articulating kinematism 11; the variable-length handling device 19 will then have a second running portion adapted to take the trolley unit 1 according to the present invention to various operating working configurations.

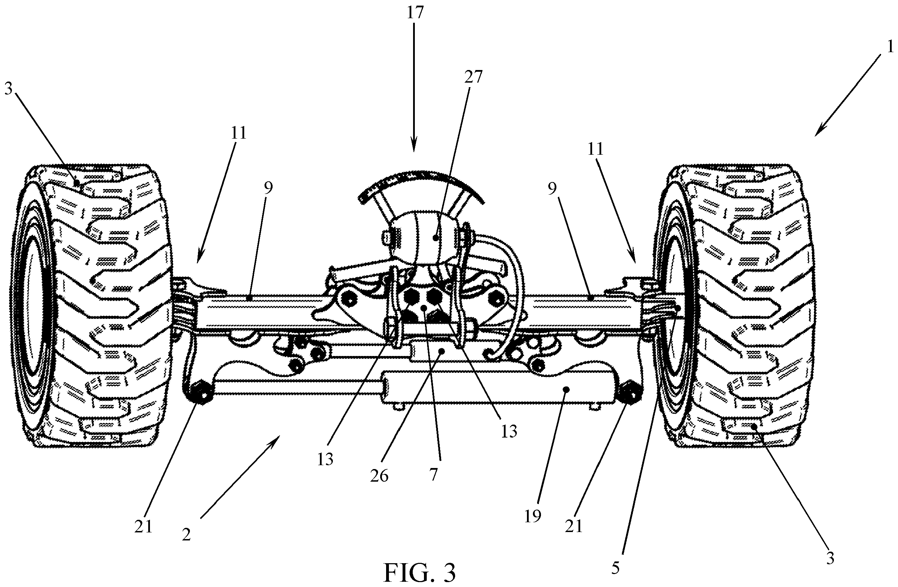

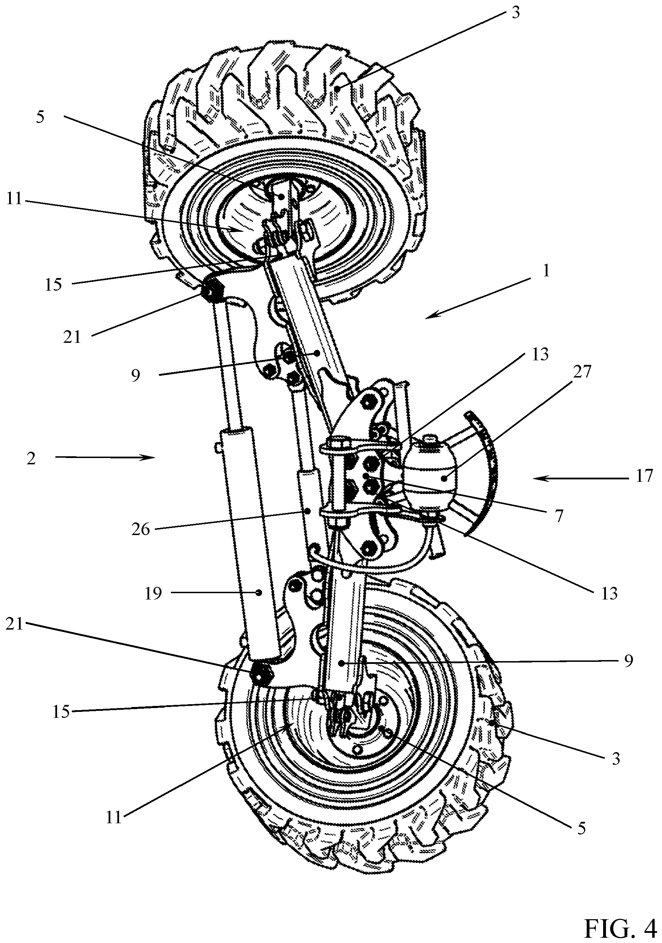

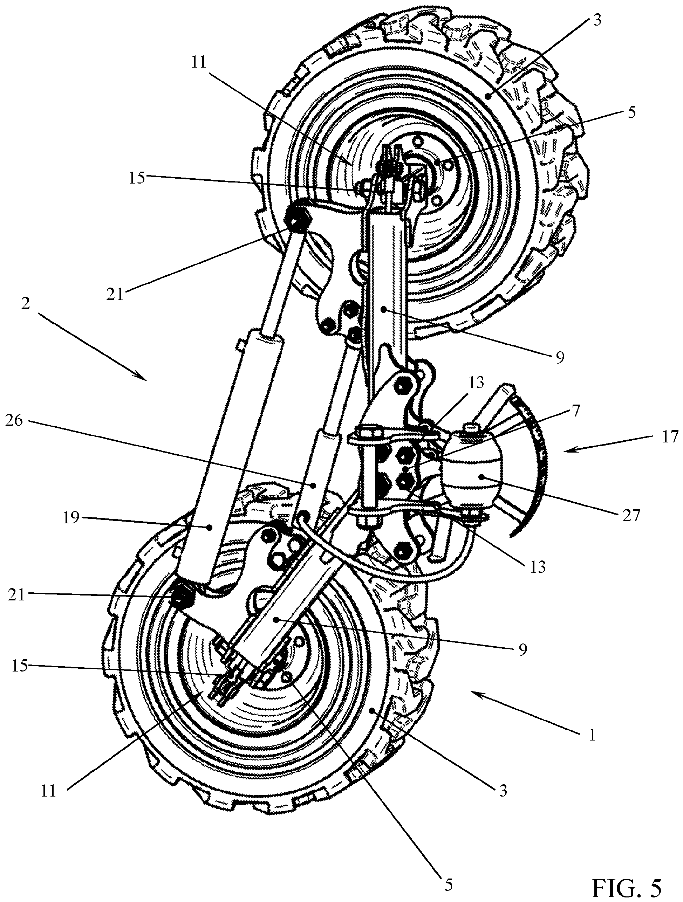

With reference now, in particular, to Figures 3, 4 and 5, it is possible to note the passage of the wheels 3 from their operating circulating position to their operating working position: Figure 3 then shows the trolley unit 1 in which the wheels 3 are in their operating circulating position, having their rotation axes around their respective, substantially coinciding hubs. The coupling variable-length handling device 19 along its own first running position decreases the subtended angle between the drive shafts 9 and, through the articulated kinematism 18 of the transmission system 17, the progressive divergence of the wheels 3, and of their respective rotation axes, till the wheels 3 are taken to their operating working position, as shown in Figure 5 (in which, preferably, the rotation axes of the wheels 3 are substantially mutually parallel) passing through the intermediate operating position of the wheels 3 shown in Figure 4. Obviously, the contrary movement of the variable-length handling device 19, namely its elongation along its own first running position, allows, in cooperation with the articulated kinematism 18 of the transmission system 17, the reverse passage, namely the passage of the wheels 3 from their operating working position to their operating circulating position.

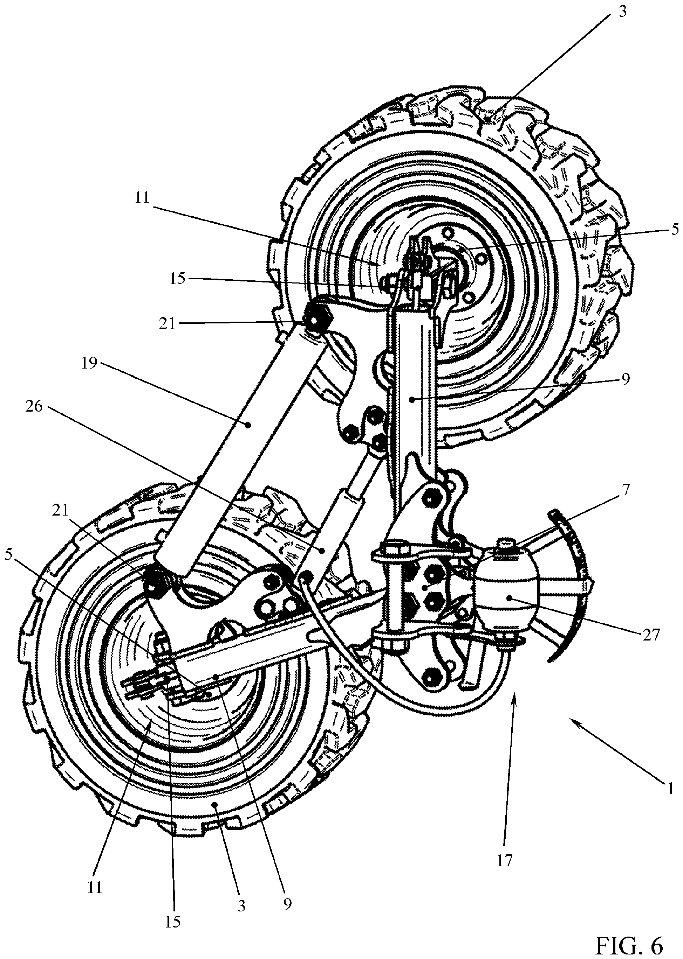

The actuating system 2, and in particular the variable-length handling device 19, is further adapted to change the distance between the wheels 3, for example at least when they are in their operating working position, to make trolley unit 1 according to the present invention assume various operating working configurations, each of such configurations being determined by the distance set between such wheels by such variable-length handling device 19, in particular by changing the subtended angle between the drive shafts 9. With reference then, in particular, to Figures 5 and 6, it is possible to note the passage, determined by the further elongation or shortening of the variable-length handling device 19 along its own second running portion, of the trolley unit 1 according to the present invention between two possible working configurations, once the wheels 3 have been taken to their operating working position.

Figure 5 then shows the trolley unit 1 in which the wheels 3 are at their maximum mutual distance allowed by the shape of the actuating system 2 and of the transmission system 17: in particular, in such operating configuration, the variable-length handling device 19 is in a position of maximum extension along its own second running portion.

Figure 6 instead shows the trolley unit 1 in which the wheels 3 are at their minimum mutual distance allowed by the shape of the second actuating system 2 and of the transmission system 17: in particular, in such operating configuration, the variable-length handling device 19 is in a position of minimum extension along its own second running portion.

Obviously, the trolley unit 1 according to the present invention can assume any further operating working configuration included between the two limit operating configurations shown in Figures 5 and 6 depending on the distance between the wheels 3, and in particular the subtended angle between the drive shafts 9, determined by the length assumed by the variable-length handling device 19 along its own second running portion.

With the above described arrangement, the second variable length handling device 26 coupled with the first variable length handling device 19 (which operates as accumulator or hydraulic spring) has the task of keeping the wheels 3 correctly oriented during the working phase (phase in which it works by thrusting two to the pressure of the first variable length handling device 19: this occurs for a good part of the excursion of the first variable length handling device 19 dedicated to regulating the ploughing depth.

By increasing the length of the first variable length handling device 19, the working depth decreases, and also the second variable length handling device 26 is elongated, but continues keeping the wheels 3 in their working positions, until the second variable length handling device 26 reaches its maximum extension: it then ends its function of a spring and becomes a sort of tie-rod, further increasing the extension of the first variable length handling device 19 (which still has part of its working stroke available), while the traction on the leverages of the second variable length handling device 26 rotates the hubs, positioning the wheels 3 in their transport configuration.

The present invention further refers to a reversible ploughing system comprising at least one trolley unit 1 as previously described.

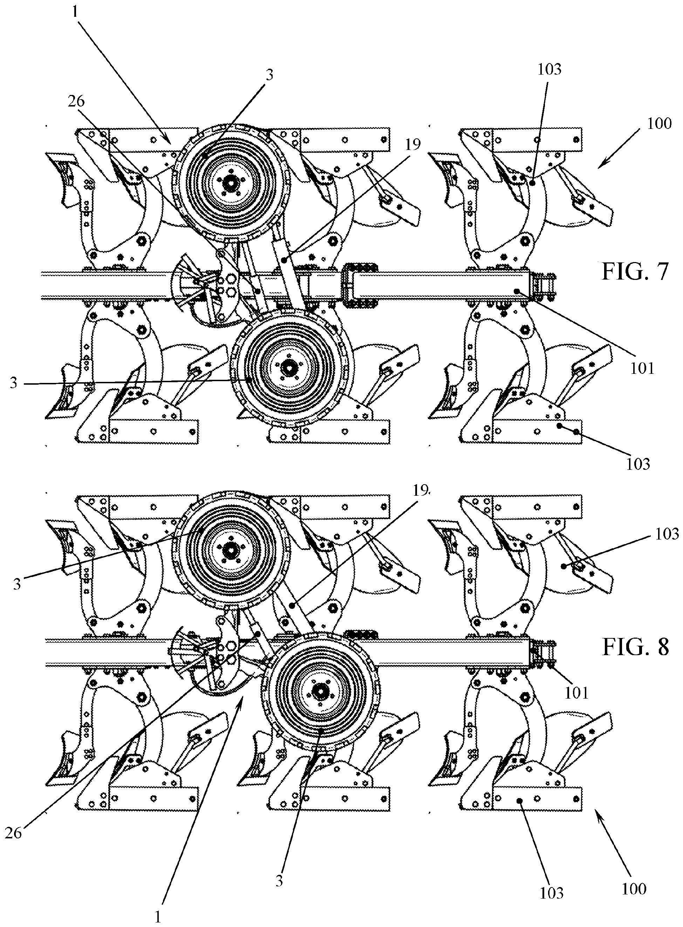

With reference in particular to Figures 7 and 8, a preferred embodiment of the reversible ploughing system according to the present invention is shown and described.

Such system substantially comprises a supporting frame 101 equipped wih a plurality of ploughing units 103. The ploughing units 103, being known in the art and not being part of the present invention, will not be further described in detail. The supporting frame 101 is adapted to be connected to transporting and working means, such as for example a common agricultural tractor (not shown) through an orientable fastening system (not shown) which makes it possible for the reversible ploughing system to assume two operating positions, namely the circulating position for transporting to the working place and the actual ploughing working position: also the fastening head, being known in the art and not being part of the present invention, will not be further described in detail.

The reversible ploughing system 100 of the invention further comprises at least one trolley unit 1 like the previously described one, connected to the supporting frame 101, to innovatively allow it to be transported to its working place.

Obviously, the hydraulic jack possibly composing the variable-length handling device 19 of the trolley unit 1 can be advantageously connected to a suitable single connector available on the tractor to exploit the hydraulic plant and its related commands and leaving free further possible connectors for other applications, if necessary.

As stated, the trolley unit 1 allows both changing the position and the orientation of the wheels 3 between an operating circulating position and an operating working position, and vice versa, and assuming one among different possible operating working configurations through a single actuating system 2 cooperating with the transmission system 17.

For the circulation on roads, it will then be enough to place the wheels of the trolley unit in their operating circulating position and the supporting frame 101 with its related ploughing units 103 in a substantially horizontal position.

Instead, to perform the actual ploughing work, it will be enough to take the supporting frame 101 with its related ploughing units 103 to a substantially vertical position and the wheels 3 of the trolley unit 1 in their operating working position: now, it is possible to advantageously regulate also the ploughing depth by acting on the actuating system 2, modifying the distance between the wheels 3: in particular, and wholly as an example, Figure 7 shows the reversible ploughing system 100 according to the present invention with the trolley unit 1 in its operating working configuration (corresponding to the one shown in Figure 5) which allows a minimum ploughing depth, while Figure 8 shows the reversible ploughing system 100 according to the present invention with the trolley unit 1 in its operating working configuration (corresponding to the one shown in Figure 6) which allows a maximum ploughing depth.

Obviously, the ploughing system 100 according to the present invention can operate with different ploughing depths included among those shown above as an example, taking the trolley unit 1 according to the present invention to assume any further operating working configuration included between the two limit operating configurations shown in Figures 5 and 6 depending on the the distance between the wheels 3 determined by the handling device 19 and, in particular, by the length assumed by the variable-length handling device 19.

## Claims

1. Trolley unit (1) for ploughing systems comprising at least two wheels (3), an actuating system (2), comprising a first variable length handling device (19), and at least one transmission system (17), said actuating system (2) operatively cooperating with said transmission system (17) both for passing said wheels (3) from an operating position of road circulation to an operating position of ploughing work through a rotation, and vice versa, and for changing an operating configuration of ploughing work of said trolley unit (1), said transmission system (17) comprising at least one articulated kinematism (14) composed of at least one second variable length handling device (26) common to a pair of articulated transmissions, each of said articulated transmissions being operatively connected to a respective hub (5), each of said articulated transmissions comprising at least one first arm (18), at least one second arm (20), at least one joining rod (15), said joining rod (15) having a first end connected to said hub (5) by interposing a respective articulating kinematism (11) and a second end connected articulated to a first end of said first arm (18), said first arm (18) having a second end connected articulated to a first end of said second arm (20), said first end of said second arm (20) and said second end of said first arm (18) being further connected articulated to a fixed spot (22) of a respective drive shaft (9), said second arm (20) having a second end hinged to said second variable length handling device (26), wherein said second ends of said second arms (20) are mutually cooperating by interposing said second variable length handling device (26) composed of a second hydraulic jack functioning both as spring, and as tie-rod, wherein said actuating system (2) changes an operating working configuration of said trolley unit (1) by modifying a distance between the circumferences of said wheels (3), or said actuating system (2) changes an operating working configuration of said trolley unit (1) by modifying a distance between said wheels (3) when said wheels (3) are in said operating working position.

2. Trolley unit (1) according to claim 1, **characterized in that** it comprises:
- at least one central articulating assembly (7);
- at least two of said wheels (3), each of which is connected to said rotary hub (5);
- at least one pair of drive shafts (9), each of said drive shafts (9) having a first end connected to a corresponding hub (5) by interposing an articulating kinematism (11) and a second end pivotally connected to said central articulating assembly (7) in a respective articulation point (13), said transmission system (17) being operatively interposed between said drive shafts (9).

3. Trolley unit (1) according to the previous claim, **characterized in that** said articulating kinematism (11) is of a hinge type.

4. Trolley unit (1) according to the previous claim, **characterized in that** said fixed spot (22) is arranged along a projecting element (24) of said drive shaft (9).

5. Trolley unit (1) according to any one of the previous claims, **characterized in that** said first variable length handling device (19) mutually operatively connects said drive shafts (9) in respective articulation points (21) and is adjustable in length depending on said operating position of said wheels (3) and/or of said operating working configuration of said trolley unit (1) to be obtained.

6. Trolley unit (1) according to the previous claim, **characterized in that** said first variable length handling device (19) has a first running position adapted to move, through the cooperation of said transmission system (18), said wheels (3) from said operating circulating position to said operating working position, and vice versa, by acting on said respective articulating kinematism (11), and a second running portion adapted to take said trolley unit (1) to various of said operating working configurations.

7. Reversible ploughing system (100) **characterized in that** it comprises at least one trolley unit (1) according to any one of the previous claims.

## Patentansprüche

1. Trolley-Baugruppe (1) für Pflugsysteme, umfassend mindestens zwei Räder (3), ein Betätigungssystem (2), einschließlich einer ersten längenvariablen Bewegungsvorrichtung (19), und mindestens ein Übertragungssystem (17), das Betätigungssystem (2) betriebsmäßig mit dem Übertragungssystem (17) zusammenwirkt, um die Räder (3) durch eine Drehung von einer Betriebsstellung für den Straßenverkehr in eine Betriebsstellung für Pflugarbeiten und umgekehrt zu bewegen und um eine betriebliche Pflugarbeit zu variieren Konfiguration der Trolleygruppe (1), wobei das Übertragungssystem (17) mindestens einen gelenkigen kinematischen Mechanismus (14) umfasst, der aus mindestens einer zweiten Bewegungsvorrichtung (26) mit variabler Länge besteht, die jeweils einem Paar von Gelenkübertragungen gemeinsam ist Gelenkgetriebe sind betriebsmäßig mit einer jeweiligen Nabe (5) verbunden, wobei jedes Gelenkgetriebe mindestens einen ersten Arm (18), mindestens einen zweiten Arm (20), mindestens eine Pleuelstange (15) umfasst, wobei die Pleuelstange (15) mit einem ersten Ende, das über die Zwischenschaltung einer jeweiligen Gelenkkinematik (11) mit der Nabe (5) verbunden ist, und einem zweiten Ende, das gelenkig mit einem ersten Ende des ersten Arms (18) verbunden ist, wobei der erste Arm (18) mit einem zweiten Ende, das gelenkig mit einem ersten Ende des zweiten Arms (20) verbunden ist, wobei das erste Ende des zweiten Arms (20) und das zweite Ende des ersten Arms (18) außerdem gelenkig mit einem festen verbunden sind Punkt (22) einer jeweiligen Halbachse (9), wobei der zweite Arm (20) ein zweites Ende aufweist, das an der zweiten Bewegungsvorrichtung (26) mit variabler Länge angelenkt ist, mit der die zweiten Enden der zweiten Arme (20) zusammenwirken einander durch die Zwischenschaltung der zweiten Bewegungsvorrichtung (26) mit variabler Länge, bestehend aus einem zweiten hydraulischen Zylinder, der sowohl eine Feder- als auch eine Zugstangenfunktion hat, wobei das Systembetätigungssystem (2) eine betriebliche Arbeitskonfiguration der Trolleygruppe (1) variiert durch Modifizieren eines Abstands zwischen den Umfängen der genannten Räder (3), oder das genannte Betätigungssystem (2) variiert eine betriebliche Arbeitskonfiguration der genannten Trolleygruppe (1), indem es einen Abstand zwischen den genannten Rädern (3) modifiziert, wenn die genannten Räder (3) sich in dieser Betriebsarbeitsposition befinden.

2. Trolley-Baugruppe (1) nach Anspruch 1, **dadurch gekennzeichnet, dass** sie umfasst:
- mindestens eine zentrale Artikulationsgruppe (7);
- mindestens zwei der Räder (3), von denen jedes mit einer entsprechenden rotierenden Nabe (5) verbunden ist;
- mindestens ein Paar Achswellen (9), wobei jede der Achswellen (9) ein erstes Ende aufweist, das über die Zwischenschaltung eines kinematischen Gelenkmechanismus (11) mit einer entsprechenden Nabe (5) verbunden ist, und ein zweites Ende, das in a verbunden ist schwenkbar mit der zentralen Gelenkgruppe (7) in einem jeweiligen Gelenkpunkt (13), wobei das Übertragungssystem (17) betriebsmäßig zwischen den Halbachsen (9) angeordnet ist.

3. Trolley-Baugruppe (1) nach dem vorherigen Anspruch, **dadurch gekennzeichnet, dass** die Gelenkkinematik (11) vom Scharniertyp ist.

4. Trolley-Baugruppe (1) nach dem vorherigen Anspruch, **dadurch gekennzeichnet, dass** der Fixpunkt (22) entlang eines hervorstehenden Elements (24) der Halbachse (9) angeordnet ist.

5. Trolley-Baugruppe (1) nach einem der vorhergehenden Ansprüche, **dadurch gekennzeichnet, dass** die erste längenveränderliche Bewegungsvorrichtung (19) die Halbachsen (9) an jeweiligen Gelenkpunkten (21) betriebsmäßig miteinander verbindet und einstellbar ist in der Länge abhängig von der Betriebsposition der Räder (3) und/oder der zu erhaltenden Betriebsbetriebskonfiguration der Trolleygruppe (1).

6. Trolley-Baugruppe (1) nach dem vorherigen Anspruch, **dadurch gekennzeichnet, dass** die erste Bewegungsvorrichtung mit variabler Länge (19) einen ersten Hubabschnitt aufweist, der dazu geeignet ist, durch das Zusammenwirken des Übertragungssystems (18) die Räder zu bewegen ( 3) von der Umlaufbetriebsposition in die Arbeitsbetriebsposition und umgekehrt unter Einwirkung auf die jeweilige Gelenkkinematik (11) und einen zweiten Bewegungsabschnitt, der dazu geeignet ist, die Wagengruppe (1) in verschiedene Arbeitskonfigurationen zu bringen.

7. Trolley-Baugruppe (100), **dadurch gekennzeichnet, dass** es mindestens eine Wagenanordnung (1) nach einem der vorherigen Ansprüche umfasst.

## Revendications

1. Groupe de chariots (1) pour systèmes de labour comprenant au moins deux roues (3), un système d'actionnement (2), incluant un premier dispositif de déplacement à longueur variable (19), et au moins un système de rappel (17), ledit système d'actionnement (2) coopérer opérationnellement avec ledit système de transmission (17) à la fois pour faire passer lesdites roues (3) d'une position opérationnelle de circulation routière à une position opérationnelle de travail de labour par une rotation, et vice versa, et pour faire varier un travail de labour opérationnel configuration dudit groupe de chariots (1), ledit système de transmission (17) comprenant au moins un mécanisme cinématique articulé (14) composé d'au moins un deuxième dispositif de déplacement à longueur variable (26) commun à une paire de transmissions articulées, chacune desdites les transmissions articulées étant fonctionnellement reliées à un moyeu respectif (5), chacune desdites transmissions articulées comprenant au moins un premier bras (18), au moins un deuxième bras (20), au moins une bielle (15), ladite bielle (15) ayant une première extrémité reliée audit moyeu (5) par interposition d'une cinématique d'articulation respective (11) et une deuxième extrémité reliée de manière articulée à une première extrémité dudit premier bras (18), ledit premier bras (18) ayant une deuxième extrémité reliée de manière articulée à une première extrémité dudit deuxième bras (20), ladite première extrémité dudit deuxième bras (20) et ladite deuxième extrémité dudit premier bras (18) étant en outre reliées de manière articulée à un support fixe point (22) d'un demi-axe respectif (9), ledit second bras (20) ayant une seconde extrémité articulée audit second dispositif de déplacement à longueur variable (26), dans lequel lesdites secondes extrémités desdits seconds bras (20) coopèrent avec les uns les autres grâce à l'interposition dudit deuxième dispositif de mouvement à longueur variable (26) constitué par un deuxième vérin hydraulique ayant à la fois une fonction de ressort et de tirant, dans lequel ledit système d'actionnement (2) fait varier une configuration de travail opérationnelle dudit groupe de chariots (1) en modifiant une distance entre les circonférences desdites roues (3), ou ledit système d'actionnement (2) fait varier une configuration de travail opérationnelle dudit groupe de chariots (1) en modifiant une distance entre lesdites roues (3) lorsque lesdites roues (3) sont dans ladite position de travail opérationnelle.

2. Groupe de chariots (1) selon la revendication 1, **caractérisé en ce qu'**il comprend :
- au moins un groupe d'articulation central (7);
- au moins deux desdites roues (3), dont chacune est reliée à un moyeu rotatif respectif (5);
- au moins une paire d'arbres d'essieu (9), chacun desdits arbres d'essieu (9) ayant une première extrémité reliée à un moyeu correspondant (5) par interposition d'un mécanisme cinématique d'articulation (11) et une seconde extrémité reliée de manière de manière pivotante vers ledit groupe d'articulation central (7) en un point d'articulation respectif (13), ledit système de transmission (17) étant interposé fonctionnellement entre lesdits demi-essieux (9).

3. Groupe de chariots (1) selon la revendication précédente, **caractérisé en ce que** ladite cinématique d'articulation (11) est du type charnière.

4. Groupe de chariots (1) selon la revendication précédente, **caractérisé en ce que** ledit point fixe (22) est disposé le long d'un élément saillant (24) dudit demi-axe (9).

5. Groupe de chariots (1) selon l'une quelconque des revendications précédentes, **caractérisé en ce que** ledit premier dispositif de déplacement à longueur variable (19) relie fonctionnellement lesdits demi-essieux (9) les uns aux autres au niveau de points d'articulation respectifs (21) et est réglable, en longueur en fonction de ladite position opérationnelle desdites roues (3) et/ou de ladite configuration de travail opérationnelle dudit groupe de chariots (1) à obtenir.

6. Groupe de chariots (1) selon la revendication précédente, **caractérisé par le fait que** ledit premier dispositif de déplacement à longueur variable (19) présente une première portion de course adaptée pour déplacer, grâce à la coopération dudit système de transmission (18), lesdites roues (3) de ladite position d'opération de circulation à ladite position d'opération de travail, et vice versa, agissant sur ladite cinématique d'articulation respective (11), et une deuxième partie de déplacement adaptée pour amener ledit groupe de chariots (1) dans diverses dites configurations d'opérations de travail.

7. Système de labour réversible (100) **caractérisé en ce qu'**il comprend au moins un ensemble chariot (1) selon l'une quelconque des revendications précédentes.
